# EUROPEAN PATENT SPECIFICATION

(11) **EP 1 850 040 B1**
(45) Date of publication and mention of the grant of the patent: **03.04.2013**
(21) Application number: 07007932.2
(22) Date of filing: 19.04.2007
(51) Int. Cl.: F16J 15/44

(54) **Low-torque dynamic sealing**
Dynamische Dichtung mit niedrigem Drehmoment
Joint d'étanchéité dynamique à faible couple

(30) Priority: 24.04.2006 BR PI0601677
(43) Date of publication of application: 31.10.2007
(73) Proprietor: Sabo Industria e Comércio Ltda., Sao Paulo SP. CEP 05036-001 (BR)
(72) Inventor: Da Mota Pavan, Orlando, São Paulo 05038-160 (BR)
(74) Representative: Ferreira Magno, Fernando Antonio

(56) References cited:
- FR-A1- 2 829 824
- US-A- 4 384 725
- US-A1- 2005 013 041
- "NYEBAR TYPE Q"[Online] XP002447125 Retrieved from the Internet: URL:http://www.nyelubricants.com/pdf/nyeba rq.doc.pdf> [retrieved on 2004-08-12]

## Description

The present descriptive report relates to a low-torque dynamic sealing, belonging in the field of sealing systems applied in the automotive industry and non-automotive applications, which has been developed to overcome problems and limitations of usual sealing systems, and more particularly according to the characteristics of the preamble of claim 1.

Many mechanisms include parts moving about one another, being, thus, subject to heat and wear-generating friction. That occurs, for example, in internal combustion engines. In order to overcome that, those mechanisms are provided with lubrication systems using lubricating fluids intended to avoid or reduce friction. Cooperating with the lubrication systems or being part of them, dynamic sealing systems are provided, intended to seal interstices through which the lubricating fluid could leak to the outside of the mechanism, as it happens, for example, between the engine block and the crankshaft.

Usual dynamic sealing systems consist of sealing devices, comprising, essentially: rubber-type material(s) lip(s) provided with free edge(s) sealing against a moving part, such as a shaft; and housing, onto which the lip(s) is (are) mounted and which is mounted on a fixed portion of the mechanism, such as the engine block. In order to ensure sealing, the sealing lip(s) must exert a certain gripping force against the moving part. Consequences thereto are a certain loss in mechanism output by friction, heat generation, and mechanism and sealing wear.

US-A-4 384 725 represents an example of pertinent prior art.

Therefore, new solutions have been searched for sealing systems in mechanical constructions with moving part subject to friction.

Thus, the object of the invention in the present patent is to provide low-torque dynamic sealing, applied in the automotive industry and non-automotive applications, which is efficient and overcomes the usual dynamic sealing systems problems.

Another objective is to provide low-torque dynamic sealing to the circulation of fluids with substantially low superficial tensions; lower than greasy lubricants'.

Another objective is to provide low-torque dynamic sealing which, in addition to overcoming the usual problems, does not feature construction or manufacturing with complexity levels making it uninteresting when compared to the conventional solutions.

Another objective is to provide a sealing system with appropriate cost.

Considering, thus, the above mentioned problems and the purpose of overcoming them, and intending to attain the related objectives, low-torque dynamic sealing has been developed, object of the present patent of invention, which considers the fact that, when a liquid is put in contact with a solid surface and the attraction (cohesion) force between their molecules is higher than the attraction (spreading) force exerted by the solid surface over the liquid, the latter does not spread, but tends to agglutinate and get spherical shapes.

Thus, the present low-torque dynamic sealing preferably does not provide a sealing element mounted between the fixed and the moving parts, which establish the interstice through which the fluid may leak, comprising, instead, essentially, the treatment of said surfaces with appropriate products, lipophobics or hydrophobics, so that they have substantially lower superficial tension than the lubricating fluid, which will not be able to "wet them", and thus, cannot leak to the outside of the mechanism.

The present invention also comprises a sealing device also using this principle, according to which, optionally, a contact element may be provided between the moving and the fixed parts, with no dynamic sealing function, but with lipophobic or hydrophobic effect.

The sealing herein overcomes the problems observed with conventional dynamic sealing systems, because, preferably, there is no component mounted between the fixed and the moving parts, which is forced against it, as it does in conventional dynamic sealing or when there is such element present; it exerts low contact, with irrelevant friction, with no dynamic sealing function, but for lipophobic or hydrophobic effect purposes. Thus, no output loss, friction, heat generation or wear occur in the mechanism, which may affect it and the sealing.

The present sealing, according to the objectives of the invention, provides superficial tension on the mechanism moving and fixed parts, appropriate to seal lubricant fluids currently widely used in automotive industry and non-automotive applications, whose viscosities are substantially lower; lower than greasy lubricants'.

Another advantage is the fact that the construction and manufacturing of the present sealing are not complex to a level that would make it uninteresting for the application.

This low-torque dynamic sealing features still another functional advantage, as it may be used clockwise and anticlockwise; said "bidirectional" sealing uses, thereto, the same part, having, thus, much simpler configuration than existing bidirectional configurations.

Another functional advantage of that kind of dynamic sealing is how easy it is to manufacture parts for applications at low temperatures. Many applications require flexible materials at low temperatures (-40°C or lower), as the moving systems vibrate, and the sealing elements in contact with these moving parts need to be flexible enough to follow the moving parts movements. Non-flexible materials at low temperatures become rigid at low temperatures, and get breakable upon works in these conditions, causing part failure. And also, materials chemically resistant to fluids and flexible at low temperatures are very expensive.

The low-torque sealing herein proposed overcomes the limitations at low temperatures, as they allow sealing without contact with the moving parts, making it possible to use less resistant materials, which are cheaper, at low temperatures, but assuring the part performance.

Another advantage is that the present sealing cost is more appropriate to the application, when compared to the usual solutions.

The enclosed drawings relate to low-torque dynamic sealing, object of the present patent, wherein:
figure 1 shows a diagrammatic section of a typical mechanical construction, to which the present low-torque dynamic sealing is applicable; and
figures 2 to 4 show diagrammatic sections of other possibilities to embody the present sealing.

In conformity with what the above listed figures illustrate, the low-torque dynamic sealing, object of the present invention, is intended to seal interstice 1 established between moving part 2, such as a crankshaft, and fixed part 3, such as the internal combustion engine block, which on one side, opens at a place external to the mechanism, and on the other side, opens at a place internal to the mechanism, which contains low viscosity lubricant fluid 4, which viscosity is lower than greasy lubricants'.

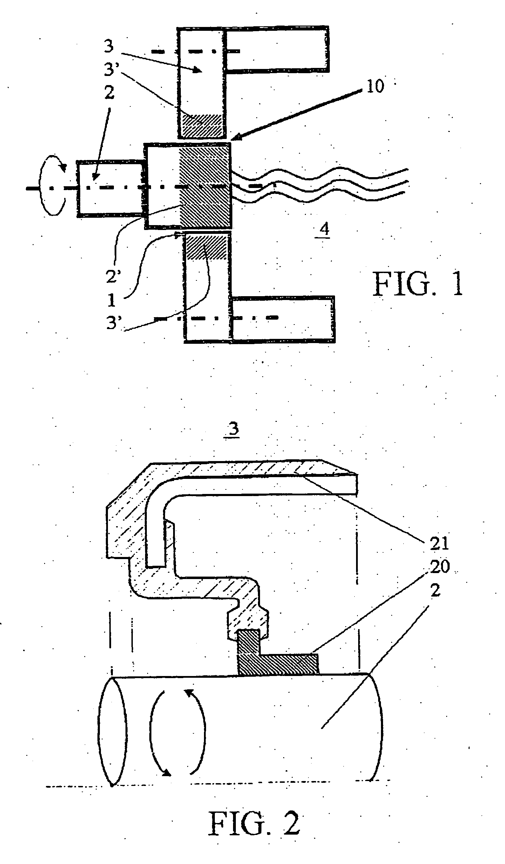

Thus, the present sealing (figure 1) comprises essentially treatment 10 of adjacent surfaces 2', 3' of moving part 2 and of fixed part 3, respectively, which establish interstice 1, so that they attain superficial tensions substantially lower than fluid 4's superficial tension; said superficial tensions of surfaces 2' and 3' selected in such a way that fluid 4 is not able to "wet" the surfaces, and therefore not able to leak between them; preferably superficial tension under 50 dynes/cm.

Said treatment 10 is made by using basically lipophobic or hydrophobic products selected among the fluoropolymers, fluorochemicals applied to surfaces, films deposited by plasma processes, use of nanotechnologies or laser or the like.

For this report purposes, lipophobic products are the ones repelling viscous liquids, such as lubricant fluids whose viscosity is lower than greasy lubricants', and hydrophobic products are the ones repelling water-based liquids, herein water and water mixed to other liquids, said aqueous solutions and water mixed to solid particles.

These lipophobic and hydrophobic products are obtained with the use of lipophobic or hydrophobic materials themselves, or materials without those characteristics but chemically treated to have their surfaces changed in order to get these characteristics, or receiving a film or cover of material with these characteristics.

Within the basic construction described above, the system, object of the present patent of invention, may have changes concerning materials, dimensions, constructive details and/or embodiment, without straying from the scope of the protection requested.

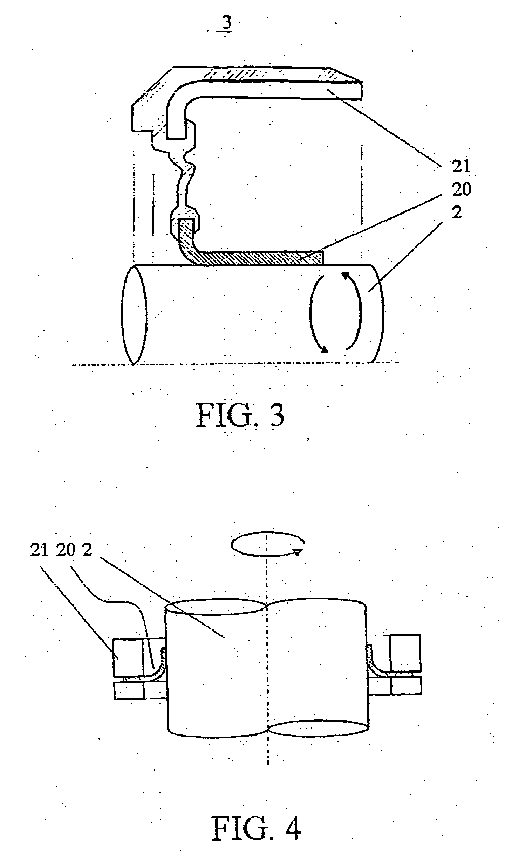

Thereby, the system provides a device (figures 2 to 4) with minimum or no contact between surfaces 2' and 3' of moving part 2 and fixed part 3, which define interstice 1; said device essentially composed of: a flexible element made of lipophobic material or flexible element whose surface is treated to get a lipophobic characteristic, or composed of a flexible element made of hydrophobic material or flexible element whose surface is treated to get a hydrophobic characteristic 20, which keeps or does not keep in contact with moving part 2 with no dynamic sealing function and therefore, with no gripping force or irrelevant gripping force thereon; and of a supporting element 21, on which lipophobic orhydrophobic element 20 is mounted, and is, on its turn, mounted on a spot on fixed part 3, which spot is crossed by or receives the part.

## Claims

1. Low-torque dynamic sealing intended to sealing interstice free (1) established between surfaces (2)' of moving part (2) and surfaces (3)' of fixed part (3) of a mechanism, which, on one side, opens at a place external to the mechanism, and on the other side, opens at a place internal to the mechanism, which contains low viscosity lubricant fluid (4), which viscosity is lower than greasy lubricants', said adjacent surfaces (2)', (3)', receive a treatment (10) based on lipophobic product(s) to get superficial tensions substantially lower than the superficial tension of fluid (4) to be sealed, preferably under 50 dynes/cm, **characterized in that** said treatment (10) consists of a flexible material made of lipophobic material or a flexible material whose surface is treated to get a lipophobic characteristic.

2. Low-torque dynamic sealing as recited in claim 1, **characterized in that** the interstice (1), contains a flexible element (20) made of lipophobic material or of material with lipophobic treatment, arranged in the interstice (1) that is in contact or not with the moving part (2), without any dynamic sealing function, having, thus, irrelevant or no gripping force to the moving part (2); and by a supporting element (21), on which lipophobic element (20) is mounted, and is, on its turn, mounted on a spot on fixed part (3), which spot is crossed by or receives the moving part (2).

3. Low-torque dynamic sealing as recited in 2, **characterized in that** the element (20) made of lipophobic material or of material with lipophobic treatment is made of flexible or rigid material and typically 15 mm wide, and that it is connected to the body (21) by a rubber-type flexible material element.

4. Low-torque dynamic sealing as recited in claim 1 and 2, **characterized in that** said the treatment (10) on said surfaces (2)' and (3)' establishing the interstice (1) or the flexible element (20) arranged in the interstice (1) incorporate hydrophobic products selected to provide said surfaces or material with superficial tension lower than the superficial tension of fluid (4) to be sealed, between 15 and 50 dynes/cm.

## Patentansprüche

1. Dynamische Dichtung mit niedrigem Drehmoment, bestimmt für die Abdichtung des freien Zwischenraums (1), der zwischen den Oberflächen (2') des mobilen Teils (2) und den Oberflächen (3') des festen Teils (3) eines Mechanismus besteht und sich auf einer Seite zu einem externen Ort und zum Mechanismus und auf der anderen Seite zu einem zum Mechanismus internen Ort öffnet, und der Schmierflüssigkeit mit niedriger Viskosität (4) enthält, deren Viskosität kleiner als das des Schmierfetts ist, und die genannten benachbarten Oberflächen (2') und (3') erhalten eine Behandlung (10) auf Basis eines lipophobischen Produkts bzw. von lipophobischen Produkten, um wesentlich kleinere Oberflächenspannungen als die Oberflächenspannung der abzudichtenden Flüssigkeit (4) zu erzeugen, bevorzugt unter 50 dyn/cm, charakterisiert durch die genannte Behandlung (10), bestehend aus einem flexiblen Material aus einem lipophoben Material oder aus einem flexiblen Material, dessen Oberfläche behandelt wird, um eine lipophobe Eigenschaft zu erhalten.

2. Die dynamische Dichtung mit niedrigem Drehmoment, gemäß dem Anspruch 1, charakterisiert durch den Zwischenraum (1), enthält ein flexibles Element (20) aus einem lipophoben Material oder aus einem Material mit lipophobischer Behandlung, eingefügt im Zwischenraum (1), das mit dem mobilen Teil (2) in Kontakt oder nicht ist, ohne irgendeine dynamische Dichtungsfunktion, und deswegen eine unwesentliche oder gar keine Dichtung auf das mobile Teil (2) ausübt und ein Trägerelement (21), auf dem das lipophobe Element montiert ist und das selbst an einer Stelle über dem festen Teil (3) montiert ist, sodass die Stelle vom mobilen Teil überragt (2) oder von diesem aufgenommen wird.

3. Dynamische Dichtung mit niedrigem Drehmoment, gemäß dem Anspruch 2, charakterisiert durch das Element (20) aus einem lipophoben Material oder aus einem Material mit lipophobischer Behandlung, und die aus einem flexiblen oder starren Material das normalerweise 15 mm breit ist und mit dem Körper (21) durch ein Element aus flexiblem Material, Art Gummi, verbunden ist.

4. Dynamische Dichtung mit niedrigem Drehmoment, gemäß den Ansprüchen 1 und 2, charakterisiert durch die genannte Behandlung (10) auf den genannten Oberflächen (2') und (3'), die ermöglicht, dass der Zwischenraum (1) oder das flexible Element (20) im Zwischenraum (1) die ausgewählten hydrophoben Produkte aufnehmen kann, um die genannten Oberflächen oder das Material mit einer geringeren Oberflächenspannung als die Oberflächenspannung der abzudichtenden Flüssigkeit (4), zwischen 15 und 50 dyn/cm, zu versehen.

## Revendications

1. Joint dynamique à binaire faible destiné à sceller l'interstice libre (1) établi entre les surfaces (2') de la partie mobile (2) et les surfaces (3') de la partie fixe (3) d'un mécanisme, lequel, d'une part, s'ouvre sur un local externe et au mécanisme, et d'autre part, s'ouvre sur un local interne au mécanisme, lequel contient du fluide lubrifiant à faible viscosité (4), dont la viscosité est plus faible que celle des graisses lubrifiantes, lesdites surfaces adjacentes recevant (2'), (3') un traitement (10) à base de produit(s) lipophobique(s) pour obtenir les tensions superficielles substantiellement plus faibles que la tension superficielle du fluide (4) devant être scellé, de préférence inférieure à 50 dine/cm, **caractérisé par** ledit traitement (10) qui consiste en un matériel flexible, fait en matériel lipophobe ou en matériel flexible, dont la surface est traitée pour obtenir une caractéristique lipophobe.

2. Joint dynamique à binaire faible, conformément à la revendication 1, **caractérisé par** l'interstice (1), qui contient un élément flexible (20) fait en matériel lipophobe ou en matériel avec un traitement lipophobique, disposé sur l'interstice (1) qui est en contact ou pas avec la partie mobile (2), sans aucune fonction d'étanchéité dynamique, et exerce donc une force de serrage insignifiante ou inexistante sur la partie mobile (2) et par un élément de support (21) sur lequel l'élément lipophobique (20) est monté et qui à son tour est monté sur un point sur la partie fixe (3), le point étant traversé par la partie mobile (2) ou reçu par celle-ci.

3. Joint dynamique à binaire faible conformément à la revendication 2, **caractérisé par le fait que** l'élément (20) fait en matériel lipophobe ou en matériel avec traitement lipophobe est fait en matériel flexible ou rigide et généralement de 15 mm de largeur et qui est relié au corps (21) par un élément en matériel flexible du type caoutchouc.

4. Joint dynamique à binaire faible conformément aux revendications 1 et 2 **caractérisé par** ledit traitement (10) sur les surfaces mentionnées (2') et (3) qui établit l'interstice (1) ou l'élément flexible (20) disposé sur l'interstice (1) qui incorpore des produits hydrophobes sélectionnés pour proportionner lesdites surfaces ou un matériel avec la tension superficielle plus faible que la tension superficielle du fluide (4) devant être scellé, entre 15 et 50 dine/cm.
